Europäisches Patentamt

European Patent Office

Office européen des brevets

(19)

(11) Publication number: **0 201 730**
B1

# EUROPEAN PATENT SPECIFICATION

(12)

(45) Date of publication of the patent specification:
27.12.89

(21) Application number: 86104910.4

(22) Date of filing: 10.04.86

(51) Int. Cl.⁴: **F16H 25/06**, F16H 21/14

(54) **Eccentric gearing with oscillating teeth elements.**

(30) Priority: **12.04.85 CN 85200606**

(43) Date of publication of application:
**20.11.86 Bulletin 86/47**

(45) Publication of the grant of the patent:
**27.12.89 Bulletin 89/52**

(84) Designated Contracting States:
**DE GB IT**

(56) References cited:
**EP-A- 0 047 920
DE-C- 312 164
DE-C- 341 053
FR-A- 2 427 519
US-A- 2 520 282**

**SOVIET INVENTIONS ILLUSTRATED, Mechanical
Section, Week 84/20, 27th June 1984, abstract
no. 126488/20 Q64, Derwent Publications Ltd., London,
GB**

(73) Proprietor: **Beijing Institute of Aeronautics and
Astronautics, Xueyuan Road 37 Haidian District,
Beijing(CN)**

(72) Inventor: **Shixian, Chen, Prof., c/o BEIJING INST. OF
AERONAUTICS AND ASTRONAUTICS, Xueyuan
Road 37 Haidian Distr. Beijing(CN)**
Inventor: **Hongxing, Wang, Prof., c/o BEIJING INST. OF
AERONAUTICS AND ASTRONAUTICS, Yueyuan
Road 37 Haidian Distr. Beijing(CN)**
Inventor: **Linai, Zhang, Prof., c/o BEIJING INST. OF
AERONAUTICS AND ASTRONAUTICS, Yueyuan
Road 37 Haidian Distr. Beijing(CN)**

(74) Representative: **Hoefer, Theodor, Dipl.-Ing.,
Kreuzstrasse 32, D-4800 Bielefeld 1(DE)**

## Description

The present invention relates to a speed reducer as indicated in the preamble portion of claim 1.

Generally, the planocentric reducer and the cyclo reducer are involved in complex technology because of their special tooth profile requirement. Furthermore, they need an intricate outlet mechanism to comply with the orbit motion of the planet. This mechanism limits the reducer's loading capacity and its efficiency, and complicates its fabrication. The inertia force and the difficulty of fabrication of cycloidal wheels become the real problems difficult to solve for those reducers of large sizes.

There are known an off-set circular disk drive or an follower-tooth drive using the sliding-tooth-engagement construction. They obviated the difficulties at the expense of using a conjugate principle, which results in complex tooth profile internal gear, marking it difficult to manufacture. In addition, a return-spring is necessary to help the teeth come back. Fact shows, however, that the return spring is a troublesome piece, because it may cut down the mechanical efficiency, the slot for it on the pin reduces the latter's strength and leads to manufacturing difficulties.

In U.S.S.R. Pat. No. SU-A 1 036 979 (126 488/20 Q64) is described a mechanical transmitting device in which the follow part is constructed as a needle gear, i.e., a ring gear comprising cylindrical pins. The driver part is an eccentric disc and each oscillatory tooth element has a plane bottom and a triangular head. During each reciprocating cycle of the oscillatory teeth element the oscillatory teeth elements are driven between the needles in the working stroke, but are pulled back by an elastic return ring during the backward stroke. Should there not be an elastic return ring to pull back the oscillatory teeth, they would be inserted into the space between the needles, unable to return back and self-locked, making the transmitting device unable to work.

The object of this invention is to improve a speed reducer based on the oscillating-teeth-element principle with simple tooth profiles and a simple construction.

According to the invention, this object is solved by the features of the main claim. The subclaims describe further positive developments of the invention.

In the inventive speed reducer, an off-set ball bearing disk is functioning as a wave generator. Between the input and output shafts is an off-set circular disk used as a wave generator to drive a series of wedge-headed oscillating teeths or teeth elements to engage with needles in a ring gear or ring element so as to render a planocentric drive possible.

Preferably it actuates a set of oscillating teeths or teeth elements (preferably pinlike) with wedged heads to oscillate in the radially orientated holes in a tooth whell to mesh with a needle-tooth internal gear. The wedged heads can be simple plane surfaces with specific angles, and the needle teeth in the internal gear can be made up of needles with or without a sleeve on each.

An approximate conjugation motion between the teeth elements is guaranted by means of proper selection of structural parameters to make the transmission be continuous, although theoretical conjugate tooth profiles are not accepted. For the same reason, a return-spring is unnecessary in the present invention. The use of double rows of sliding tooth elements is another benificial construction to continuous motion and reduction of internal unbalanced forces, which improves the transmission characteristics and renders the small oscillating teeth to take the place of large planet gears possible.

Internal forces are balanced for the most part, leaving little inertia force for large reducers. All this makes this kind of reducer be easy to manufacture, compact in size, cheaper in costs, and with higher loading capacity and higher transmission efficiency. That is why the reducer's size can be reduced with less inertia forces.

Preferred embodiments of the invention are contained in the subclaims.

Embodiments of the invention are illustrated by way of example in the accompanying drawings and are described more fully hereinafter. In the drawings:

Fig. 1 is a cross-section of an oscillating-tooth speed reducer;

Fig. 2 is a longitudinal section of the same oscillating-tooth speed reducer;

Fig. 3 is an enlarged sectional view of Fig. 1 with teeth in the tooth wheel showing the geometric relationship and the dimensions;

Fig. 4 is an enlarged sectional view of a pump for teeth;

Fig. 5 is an enlarged sectional view of another pump for teeth.

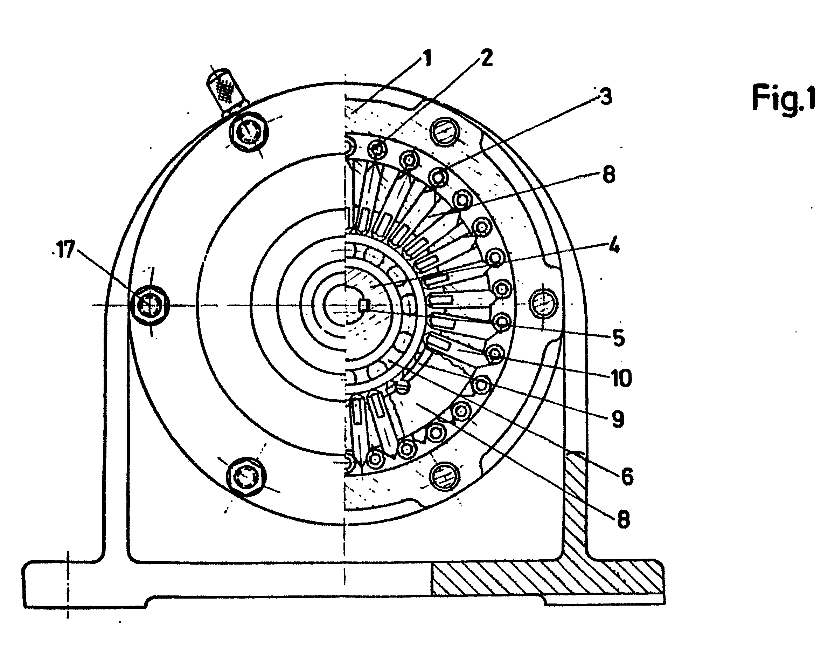

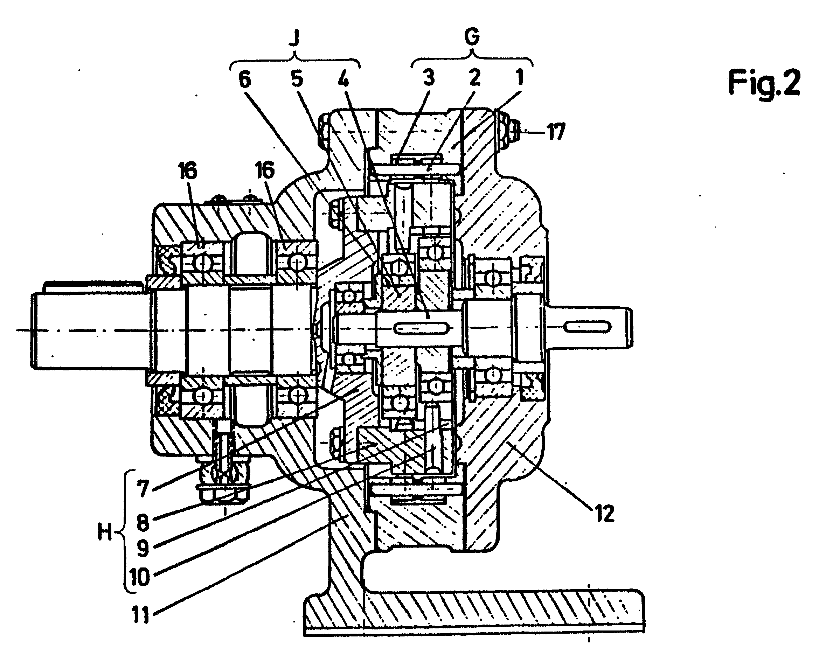

The features of this invention can be related through Fig. 1 and 2. The oscillating-tooth speed reducer has its case designed by the installation requirements. It can be fixed up vertically or horizontally.

An input shaft 4 and an output shaft 7 are assembled coaxially in a common axis. The output shaft 7 is supported in case 11 by means of two ball bearings 16. The inner part of this shaft 7 is bolted to a circular ring 8, part of a tooth-like wheel H. On this ring 8 there are two rows of equally spaced holes; and these two rows are staggered half a pitch each other along the circumference. In every hole is fitted up an oscillating tooth 10. Thus a double-row tooth-wheel H is tooled.

Other features consist in the proper angel between the two wedge surfaces on the oscillating teeth 10 which is itself cylindrical or slightly convex, and its tail is in the form of a spherical surface 10b. The oscillating tooth 10 is capable of straight motion without turning in the hole by virtue of a space ring 9.

These oscillating teeth (preferably pinlike) are milled a little on one side for guiding use.

A ring element G is formed of a circular ring 1 of U-cross-section and is provided with needles 2, generally with a free sleeve 3 on each. For limited space, only needles 2 are preferable, but letting them turn freely in the circular ring 1. For larger axial dimensions, needles 2 or needles together with sleeves 3 can be separated into two rows corresponding to the double-row tooth-wheel H. A middle support for the needles 2 may be unavoidable in this case. In short, needles 2 and sleeves 3 together with the circular ring 1 constitute the ring element G. The difference of the number of oscillating tooth and the number of needles in one row is ±1, something like the tooth relationship in general planocentric reducers.

The input shaft 4 is supported at one end in a case cover 12, and at the other end in the output shaft 7. Case cover 12 and ring 1 are rigidly connected to case 11 by use of a set of bolts 17.

Wave generator J is a similarly dual construction, 180° in phase difference, each side of it driving a row of oscillating teeth 10 – the generator profile against the tail part of oscillating teeth 10. The wave generator is composed of an off-set disk 5, which is mounted on ball bearings 6. For larger sizes, an additional ring may be used on the outer race of bearing 6 without changing the bearing itself.

From the description above, it is evident that when the input shaft 4 turns, the wave generator J produces an off-set motion which drives the oscillating teeth 10 to move radially in succession. These oscillating teeth 10 mesh with the ring element G periodically to yield a positive engagement motion, which enforce the tooth wheel H or the ring element G to produce a relative motion in the ratio of +Z with respect to the input shaft, herewith Z is the number of teeth of the follower, no matter whether it is the tooth wheel or ring element. The returning action of the oscillating teeth 10 is accomplished by the conjugating effort itself, and not by any outside assistance.

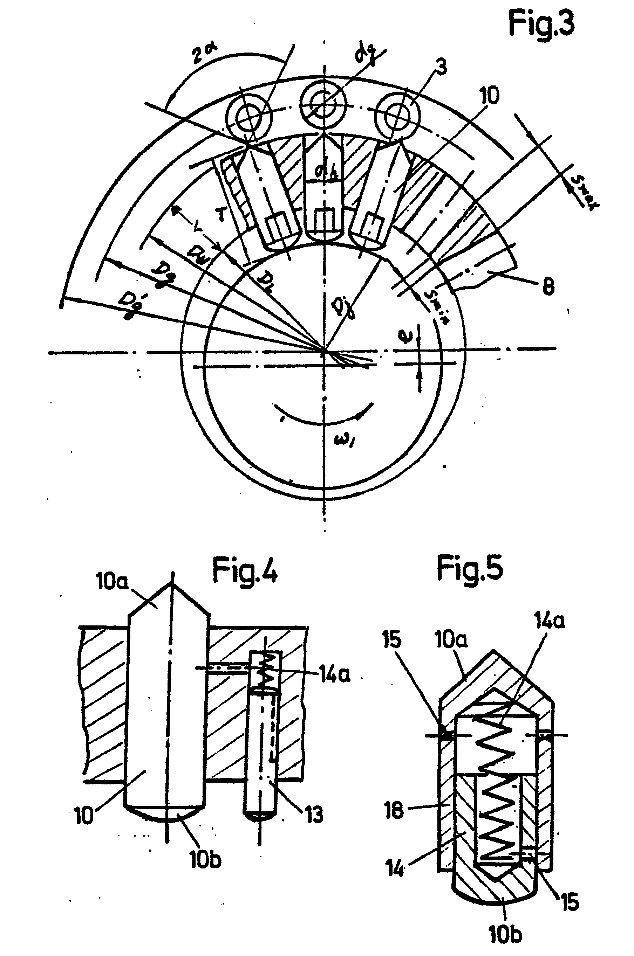

In heavy-duty reducers, the oscillating teeth 10 are preferably designed with a pump construction (Fig. 4) with an attached plunger 13 and a spring 14a. In another case (Fig. 5) the toothed-element becomes a cylinder 18 with a spring loaded plunger 14 inside. At the wall of the cylinder 18 and the plunger 14 there are holes 15 for oil inlet and outlet. The wave generator actuates the plunger 14 to pump lubricant out to lubricate the contact surface in forces lubrication condition; while the plunger 14 returns under the action of spring 14a, it sucks.

Fig. 5 is that alternative to embody the pumping principle in the tooth wheel proper.

G, H and J are aligned, any one of them may be the stationary, or the driving, or the driven part.

Let $Z_g$-number of needles, $Z_h$-number of oscillating teeth, then $Z_h = Z_g \pm 1$.

In the case of a stationary tooth wheel H, the transmission ratio is $i = \pm Z_g$.

The "+" sign is used for $Z_h = Z_g - 1$ transmission in the same direction, and the "–" sign for $Z_h = Z_g + 1$ (transmission in the opposite direction).

In the case of a stationary ring element G, $i = \pm Z_h$.

Transmission parameters: Fixed ring element G is preferable.

For single stages, i = 15~60.

For double stages, i = 225~3600.

Number of teeth: $Z_h = i$.

Number of needles: $Z_g = i+1$.

Circular pitch of needles tg is to be determined by tooth strength.

Inside diameter of tooth wheel $D_L = D_w - 2L$.

Breadth of tooth wheel L=(1.2~2) dh, larger values are to be chosen for larger circular pitches.

Minimum thickness of the holey wall

$$\text{Smin} = \frac{\pi D_L}{2h} - d_h > 0.5\text{mm.}$$

Wave generator:

Radius $R_j = D_L/2 - e - \Delta 2$

Space $\Delta 2 \geq 0.2\, d_h$

Standard ball bearings can be selected according to the Rj value.

Eccentricity e:

$e = K_z \cdot t_g$, $K_z = 0.4 \sim 0.7$, to be modified by correct meshing relationship.

Needle diameter $d_g = (0.4 \sim 0.6) t_g$

Tooth diameter $d_h = (0.4 \sim 0.6) t_g$

Tooth length $T = D_g/2 - d_g/2 - D_j/2 + e - \Delta 1$

$\Delta 1 = (0.2 \sim 0.4) e$

Wedge angle on the tooth $\alpha = 30 \sim 45°$.

Fig.1 and 2 give a real example of the said reducer. Through tests it has been proven that its transmission ratio is rather high and its size much smaller, down to 1/3 of the size of its ordinary gear counterparts. In this series of products, the transmission ratio for single stages ranges from 15 to 60. The loading capacity amounts to 6 times of that of its counterparts. For general-purpose series, the output power is within the range of P=0.6~110 KW. It has all the advantages as mentioned above.

Its efficiency is high, e.g., $\eta = 0.9 \sim 0.94$ at transmission ratio i=29.

Among its other features are less energy loss, lower noise level, high loading capacity, compact in size, simple construction, easy manufacture and maintenance, and ease of its standardization and serialization.

## Claims

1. An oscillating tooth-like speed reducer comprising a ring element (G) comprising a set of needles (2) arranged in a circular ring (1), a tooth-like wheel (H) comprising a number of oscillating teeth elements (10), and at least one wave generator (J) comprising an off-set rotatable circular disc (5), wherein the ring element (G), the tooth-like wheel (H) and the wave generator are assembled such that said teeth elements (10) cooperate with said needles (2) and said circular disc (5), whereby the number of oscillating teeth elements (10) is one more or less than the number of needles (2) in the ring element (G), characterized in that the diameter $d_h$ of said teeth elements (10) is greater than the free distance between adjacent needles (2).

2. A reducer according to claim 1, in which the oscillating teeth elements (10) are virtually cylindrical or slightly convex pins with wedge heads of straight profile on both sides, with spherical tails or with miniature flat surface tails.

3. A reducer according to claim 1 or 2, in which the teeth elements (10) are milled a little to one side for guiding.

4. A reducer according to any one of claims 1 to 3, in which the needles (2) are rotatably arranged in the circular ring (1) which is preferably of U-cross-section.

5. A reducer according to any one of claims 1 to 3, in which the needles (2) are fixed in the circular ring with a free sleeve (3) on each needle.

6. A reducer according to any one of claims 1 to 5, in which a ball bearing (6) is provided between said teeth elements (10) and said off-set circular disc.

7. A reducer according to claim 6, in which an additional ring is fixed on the outer race of said ball bearing (6).

8. A reducer according to any one of claims 1 to 7, in which two rows of oscillating teeth elements (10) and two wave generators (J) are provided.

9. A reducer according to any one of claims 1 to 8, in which the oscillating teeth elements (10) cooperate with a pin-type oil pump construction with slidable plungers (13, 14) loaded by springs (14a), and with oil openings (15) leading to the sliding surface of the teeth elements (10).

**Patentansprüche**

1. Reduktionsgetriebe mit hin- und herbeweglichen, zahnartigen Elementen mit einem Ringelement (G), welches eine Anordnung von Nadeln (2) umfaßt, welche in einem Kreisring (1) angeordnet sind, einem zahnradartigen Rad, welches eine Anzahl von hin- und herbeweglichen Zahnelementen (10) umfaßt, und zumindest einem Wellengenerator (J), welcher eine versetzte, drehbare Kreisscheibe (5) umfaßt, wobei das Ringelement (G), das zahnradartige Rad (H) und der Wellengenerator so angeordnet sind, daß die Zahnelemente (10) mit den Nadeln (2) und der Kreisscheibe (5) zusammenwirken, wobei die Anzahl der hin- und herbeweglichen Zahnelemente (10) größer oder kleiner ist, als die Anzahl der Nadeln (2) in dem Ringelement (G), dadurch gekennzeichnet, daß der Durchmesser $d_h$ der Zahnelemente (10) größer ist als der freie Abstand zwischen benachbarten Nadelelementen (2).

2. Reduktionsgetriebe nach Anspruch 1, bei welchem die hin- und herbeweglichen Zahnelemente (10) virtuell zylindrische oder geringfügig konvexe Bolzen mit keilförmigen Köpfen gerader Profilierung an beiden Seiten sind, sowie mit sphärischen Endstücken oder mit Endstücken mit kleinen flachen Flächen.

3. Reduktionsgetriebe nach Anspruch 1 oder 2, bei welchem die Zahnelemente (10) zur Führung an einer Seite geringfügig angefräst sind.

4. Reduktionsgetriebe nach einem der Ansprüche 1 bis 3, bei welchem die Nadeln (2) drehbar in dem Kreisring (1) angeordnet sind, welcher bevorzugterweise einen U-förmigen Querschnitt aufweist.

5. Reduktionsgetriebe nach einem der Ansprüche 1 bis 3, bei welchem die Nadeln (2) in dem Kreisring mittels einer freien Buchse (3) an jeder Nadel befestigt sind.

6. Reduktionsgetriebe nach einem der Ansprüche 1 bis 5, bei welchem ein Kugellager (6) zwischen den Zahnelementen (10) und der versetzten Kreisscheibe vorgesehen ist.

7. Reduktionsgetriebe nach Anspruch 6, bei welchem ein zusätzlicher Ring an dem äußeren Umfang des Kugellagers (6) befestigt ist.

8. Reduktionsgetriebe nach einem der Asprüche 1 bis 7, bei welchem zwei Reihen von hin- und herbeweglichen Zahnelementen (10) und zwei Wellengeneratoren (J) vorgesehen sind.

9. Reduktionsgetriebe nach einem der Ansprüche 1 bis 8, bei welchem die hin- und herbeweglichen Zahnelemente (10) mit einer Ölpumpenkonstruktion einer Nadelbauart mit verschiebbaren Kolben (13, 14) zusammenwirken, welche durch Federn (14a) vorbelastet sind, und mit Ölöffnungen (15), welche zu der Gleitfläche der Zahnelemente (10) führen.

**Revendications**

1. Réducteur de vitesse denté oscillant comportant un élément annulaire (G) comprenant une série d'aiguilles (2) disposées dans un anneau circulaire (1), une roue dentée (H) comportant plusieurs dents oscillantes (10) et au moins un générateur d'ondes (J) comprenant un disque circulaire rotatif décalé (5) dans lequel l'élément annulaire (G), la roue dentée (H) et le générateur d'ondes sont assemblés de façon à ce que les dites dents (10) coopèrent avec les dites aiguilles (2) et le dit disque circulaire (5), le nombre de dents oscillantes (10) étant supérieur ou inférieur d'une unité au nombre d'aiguilles (2) de l'élément annulaire (G), caractérisé en ce que le diamètre $d_h$ des dites dents (10) est supérieur à l'éspace libre entre des aiguilles adjacentes (2).

2. Réducteur suivant la revendication 1, dans lequel les dents oscillantes (10) sont des pointes virtuellement cylindriques ou légèrement convexes, avec des têtes cunéiformes présentant un profil droit des deux côtés, avec des queues sphériques ou des queues à minuscules surfaces plates.

3. Réducteur suivant la revendication 1 ou 2, dans lequel les dents (10) sont légèrement fraisées d'un côté à des fins de guidage.

4. Réducteur suivant l'une quelconque des revendications 1 à 3, dans lequel les aiguilles (2) sont disposées de façon à pouvoir tourner dans l'anneau circulaire (1) qui a de préférence une section transversale en U.

5. Réducteur suivant l'une quelconque des revendications 1 à 3, dans lequel les aiguilles (2) sont fixées dans l'anneau circulaire à l'aide d'un manchon libre (3) sur chaque aiguille.

6. Réducteur suivant l'une quelconque des revendications 1 à 5, dans lequel un roulement à billes (6) est prévu entre les dites dents (10) et le dit disque circulaire décalé.

7. Réducteur suivant la revendication 6, dans lequel un anneau supplémentaire est fixé sur le chemin extérieur du dit roulement à billes (6).

8. Réducteur suivant l'une quelconque des revendications 1 à 7, dans lequel sont prévus deux rangées de dents oscillantes (10) et deux générateurs d'ondes (J).

9. Réducteur suivant l'une quelconque des revendications 1 à 8, dans lequel les dents oscillantes (10) coopèrent avec une pompe à huile du type à aiguille munie de plongeurs glissants (13, 14) rappelés par des ressorts (14a) et d'orifices pour l'huile (15) aboutissant à la surface de glissement des dents (10).

Fig.1

Fig.2

Fig.3

Fig.4

Fig.5